# EUROPEAN PATENT APPLICATION

(11) **EP 2 138 828 A1**
(43) Date of publication of application: **30.12.2009**
(21) Application number: 08740254.1
(22) Date of filing: 11.04.2008
(51) Int. Cl.: G01N 21/35, G01N 1/36

(54) **PELLET FOR SPECTROMETRY, PROCESS FOR PRODUCING THE PELLET, AND METHOD FOR SPECTROMETRY USING THE PELLET**

(30) Priority: 13.04.2007 JP 2007105945
(71) Applicant: Arkray, Inc., Kyoto-shi, Kyoto 601-8045 (JP)
(72) Inventor: OGAWA, Yuichi, Kyoto-shi Kyoto 601-8045 (JP); OKAMOTO, Masashi, Kyoto-shi Kyoto 601-8045 (JP)
(74) Representative: Merrifield, Sarah Elizabeth
(86) International application number: PCT/JP2008/057157
(87) International publication number: WO 2008/129959

(57) **Abstract**

A pellet used for spectrometry is manufactured by, for example, mixing polyethylene powder having an average particle size not greater than 35 µm with powder of an analysis target, and compressing the mixture. A sample pellet (B) prepared by compacting only polyethylene powder having an average particle size not grater than 35 µm exhibits a high transmittance in the wave number range of 10 - 340 cm⁻¹. In spectrometry using a pellet of the present invention, spectrum waveform of the analysis target material at a range of wave number 140 - 250 cm⁻¹ is measured.

## Description

### TECHNICAL FIELD

The present invention relates to a pellet used for spectrometry in analyzing an analysis target, and in particular to a pellet for spectrometry in the frequency range of terahertz (THz).

### BACKGROUND ART

Conventionally, spectrometric analysis of an analysis target employs a FT-IR (Fourier transform infrared spectrometer), which is an apparatus for measuring intensity distribution over a range of various infrared wavelengths by performing Fourier transformation (see Patent Document 1 for example).

In spectrometry, light emitted from a light source of the FT-IR irradiates an analysis target, and a spectrum of light which has passed through the analysis target is detected. By comparing the waveform of the detected spectrum with a spectrum waveform of a known substance, a substance contained in the analysis target is identified. In the spectrometry, if the ratio of the analysis target is high, the absorption peak is enhanced too much, which causes failure in obtaining an appropriate spectrum waveform. For this reason, a pretreatment such as dilution is performed.

As an example of such a pretreatment, KBr tablet method is well known preparatory process for measuring spectroscopic characteristics of a powdery analysis target. The KBr tablet method is a method of making a pellet serving as a specimen for the FT-IR analysis. In this method, powder of potassium bromide (KBr) serving as diluent is mixed with powder of the analysis target, and then the mixture is compressed in a press machine. Since KBr allows passage of infrared light which has a wave number not smaller than 500 cm⁻¹, the method is applicable to identification of a substance which has a spectral waveform characteristic in this wave number range. Further, if in cases where the measurement is performed with regard to the range of wave number not smaller than 250 cm⁻¹, cesium iodide (CsI) is used as diluent.

On the other hand, if a qualitative analysis measurement is performed with regard to a substance which shows a spectrum waveform characteristic in terahertz range which corresponds to a wave number from 3 to 140 cm⁻¹, polyethylene powder in place of KBr is employed as diluent for making the pellet.

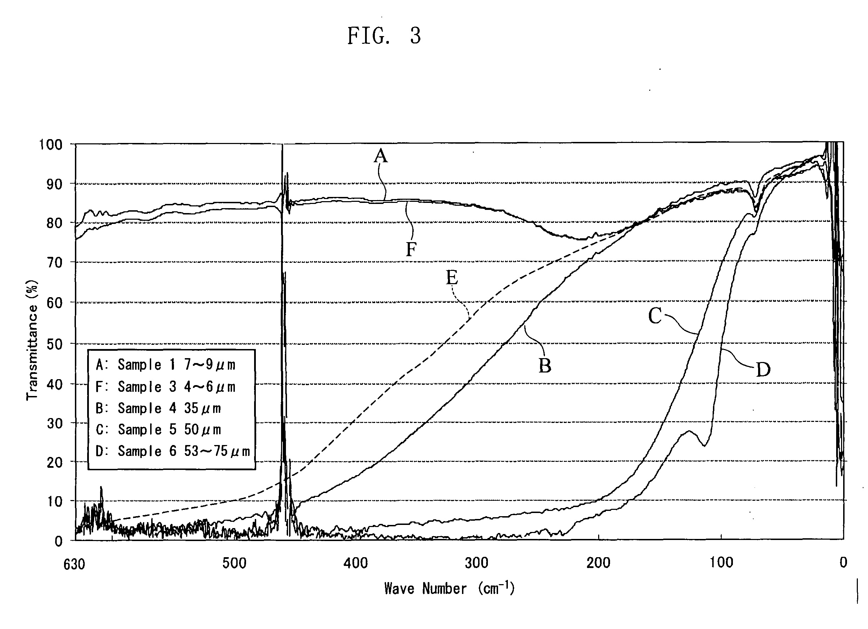

However, the conventional pellet containing polyethylene powder shows poor transmittance for infrared light of wave numbers not smaller than 140 cm⁻¹ (Waveform D in Fig. 3), and the spectrum waveform is not properly observed in the range of wave numbers not smaller than 140 cm⁻¹.
Patent Document 1: JP-A-H05-18824
Patent Document 2: JP-A-H05-232018

### DISCLOSURE OF THE INVENTION

The present invention has been proposed under the above-described circumstances. It is, therefore, an object of the present invention to provide a pellet for spectrometry, where the pellet is capable of observing a spectrum waveform in the range of a wave number of at least 140 - 250 cm⁻¹ of an analysis target, while also providing a process for manufacturing the pellet, and a method for spectrometry using the pellet.

To solve the problem described above, the present invention takes the following technical measures.

According to a first aspect of the present invention, there is provided a tablet type pellet used for spectrometry, where the pellet comprises: powder of a prescribed material having an average particle size not greater than 35 µm; and powder of an analysis target, and a mixture of the powder of the prescribed material and the powder of the analysis target is compacted into the pellet.

Preferably, the prescribed material may be a polymer compound.

Preferably, the prescribed material may be polyethylene.

According to a second aspect of the present invention, there is provided a method for spectrometry using the pellet according to the first aspect of the present invention. The method comprises the steps of: irradiating the pellet with light to obtain first spectrum data covering at least a range of wave number from 3 to 630 cm⁻¹ of light transmitted through the pellet; irradiating another pellet prepared by compacting only the powder of the prescribed material with light to obtain second spectrum data covering at least a range of wave number from 3 to 630 cm⁻¹ of light transmitted through the above-mentioned another pellet; and obtaining a transmittance spectrum waveform of the analysis target covering at least a range of wave number from 3 to 630 cm⁻¹ from the first spectrum data and the second spectrum data.

According to a third aspect of the present invention, there is a method of manufacturing a pellet used for spectrometry, where the method comprises the steps of: mixing powder of a prescribed material having an average particle size not greater than 35µm and powder of an analysis target; and compressing the mixed powders at a predetermined high pressure to form a tablet type pellet.

Other features and advantages of the present invention will become apparent from the detailed description given below with reference to the accompanying drawings.

### BRIEF DESCRIPTION OF THE DRAWINGS

Fig. 1 is a configuration diagram of an FT-IR 1 for spectrometry using a pellet according to the present invention.
Fig. 2 is a perspective view of a tablet type pellet according to the present invention.
Fig. 3 shows transmittance characteristics in the terahertz range, of the pellets made of polyethylene powder having a different average particle size.
Fig. 4 shows an example of a result of spectrometry performed in the terahertz range using a polyethylene pellet made of powder having an average particle size from 7 to 9 µm.
Fig. 5 shows transmittance characteristics in the terahertz range, of pellets made of polypropylene powder having a different average particle size.

### BEST MODE FOR CARRYING OUT THE INVENTION

Preferred embodiments of the present invention will be described with reference to the drawings.

Firstly, how spectrometry is performed will be described.

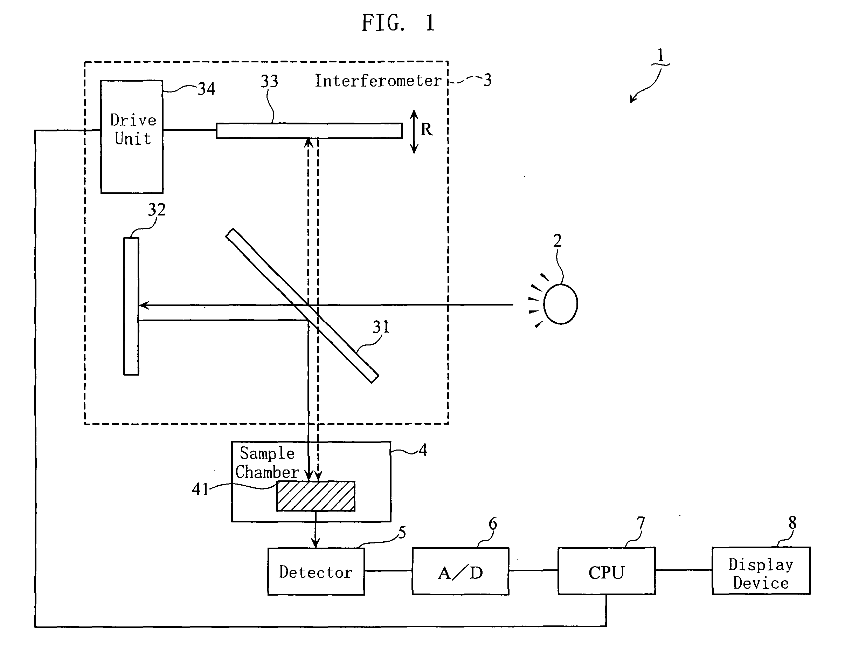

Fig. 1 is a configuration diagram of an FT-IR 1 for spectrometry using a pellet according to the present invention. The FT-IR 1 includes a light source 2, an interferometer 3, a sample chamber 4, a detector 5, an A/D converter 6, a computer 7 and a display device 8.

The light source 2 emits light which includes at least a wave number range from 3 to 630 cm⁻¹.

The interferometer 3 produces interference light based on the light emitted by the light source 2, and causes the interference light to irradiate a sample 41 (corresponding to a pellet according to the present invention, and referred to as "pellet 41" below) which is placed in the sample chamber 4. The interferometer 3 includes a semitransparent mirror 31, a fixed mirror 32, a moving mirror 33 and a drive unit 34. The semitransparent mirror 31 allows part of light to pass through while reflecting the rest of the light. The fixed mirror 32 and the moving mirror 33 reflect the whole light. The fixed mirror 32 is fixed in the interferometer 3 whereas the moving mirror 33 is movable in parallel with the optical axis (in direction R in Fig. 1). The drive unit 34 moves the moving mirror 33 under control by the computer 7.

The light emitted from the light source 2 is separated by the semitransparent mirror 31 into transmitted light and reflected light. In Fig. 1, the transmitted light is illustrated with a solid-line arrow whereas the reflected light is depicted with a broken-line arrow. There is an optical path difference between the transmitted light reflected by the fixed mirror 32 and the reflected light reflected by the moving mirror 33. Interference occurs between the transmitted light and the reflected light when these come together. The optical path difference is varied as the moving mirror 33 is moved, and the varied interference light from the interferometer 3 irradiates the pellet 41 placed in the sample chamber 4.

The interference light emitted from the interferometer 3 passes through the pellet 41 and is detected by the detector 5. In this process, a component contained in the pellet 41 allows the pellet 41 to absorb infrared light of a specific wave number, whereby the amount of the infrared light reaching the detector 5 is reduced. The A/D converter 6 converts a detection signal outputted from the detector 5 into a digital signal.

The computer 7 performs Fourier transformation regarding the digital signal to calculate a spectrum data. Through this process, the intensity of the infrared light having the specific wave number and absorbed by the pellet 41 remain low. The computer 7 divides this calculated spectrum data by another spectrum data which is calculated in advance regarding a pellet 41 which does not contain the analysis target. Thus, the computer calculates a transmittance spectrum of the analysis target, and displays the obtained spectrum waveform on the display device 8.

Further, the computer 7 holds transmittance spectra of various known substances as a library in an illustrated storage device. The computer 7 performs matching check of the waveform of the transmittance spectrum of the analysis target with the library, and thereby identifies the component of the analysis target.

The method of spectrometry according to the present invention uses a tablet type pellet as a sample. The pellet is provided by mixing powder of the analysis target and powder of a diluent and then compacting the mixture at a predetermined high pressure (of several tons). The pellet has a substantially columnar shape with a relatively thin thickness (about 1 - 2 mm, for example).

A method of manufacturing a pellet according to the present invention will be described below.

Firstly, an analysis target is pounded in an agate mortar. Then, polyethylene powder having an average particle size of 7 through 9 µm, which serves as diluent, is mixed with the powdered analysis target at a ratio of 100:3. In this way, a powdery sample which contains the analysis target at a rate of 3% with respect to polyethylene is obtained. It should be noted here that the mixing ratio between polyethylene and the analysis target is only exemplary and therefore limited to the above value.

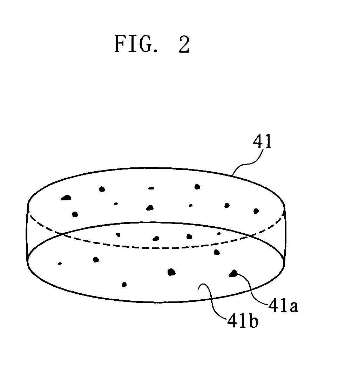

The sample is subjected to a compacting process using a tablet producing machine. Thus, a tablet type pellet 41 as shown in Fig. 2 is obtained, which contains the analysis target 41a at a rate of 3% with respect to 200 mg of polyethylene, and has a weight of 206 mg and a thickness of about 1.6 mm. Here, the weight and the thickness of the pellet 41 are only exemplary and not limited to these.

In the present embodiment, the diluent is provided by polyethylene powder which has an average particle size of 7 through 9 µm. However, other materials may be used as the diluent as far as a press-formed pellet made of powder of such materials allows transmission of light of a wave number in a range of 3 - 630 cm⁻¹.

An experiment to identify materials usable as diluent for a pellet according to the present invention will be described below.

In this experiment, using the FT-IR 1 described above, transmittance spectra of diluents were calculated from spectrum data regarding pellets made of diluents not containing an analysis target 41a, and spectrum data regarding no pellet (i.e. spectrum data of air).

By using the same method as the above-described pellet producing method, pellets having a weight of 200 mg and a thickness of 1.6 - 2.0 mm were made of diluents only, where the diluents were polyethylene powers whose average particle sizes were 7 - 9, 35, 50, and 53 - 75 µm, respectively. Measurement by the FT-IR 1 was performed under the condition of a frequency resolution of 2 cm⁻¹ and the number of accumulation determined automatically by AUTO function.

Fig. 3 shows transmittance characteristics in the terahertz range, of pellets each of which is made of polyethylene powder having a different average particle size.

In Fig. 3, the horizontal axis represents wave numbers (unit: cm⁻¹), and the vertical axis represents transmittance (unit: %) under the assumption that the transmittance of air is 100%. Waveforms A, B, C and D indicate transmittance characteristics of the pellets made of polyethylene powder having an average particle size of 7 - 9 µm, 35 µm, 50 µm, and 53 - 75 µm, respectively. It should be noted that noise appears near wave number 460 cm⁻¹, which is generated due to absorption by an optical device incorporated in the FT-IR 1.

The pellet made of polyethylene powder having an average particle size of 53 - 75 µm (hereinafter, referred to as "polyethylene pellet") shows a transmittance characteristic D, in which transmittance is above 80% in the range of wave number 5 - 70 cm⁻¹, sharply drops in the range of wave number 50 - 110 cm⁻¹, and becomes not more than 20% in the range of wave number 140 - 630 cm⁻¹.

The polyethylene pellet having an average particle size of 50 µm shows a transmittance characteristic C, in which transmittance is above 80% in the range of wave number 10 - 80 cm⁻¹, sharply drops in the range of wave number 80 - 200 cm⁻¹, and becomes not more than 20% in the range of wave number 160 - 630 cm⁻¹.

The polyethylene pellet having an average particle size of 35 µm shows a transmittance characteristic B, in which transmittance is above 80% in the range of wave number 10 - 160 cm⁻¹, gradually drops in the range of wave number 160-440 cm⁻¹, and becomes 20% or lower in the range of wave number 380 - 630 cm⁻¹.

The polyethylene pellet having an average particle size of 7 - 9 µm shows a transmittance characteristic A, in which transmittance is not less than 75% in the range of wave number 3 - 630 cm⁻¹, and not less than 80% at almost the whole range. Further, the experiment was also conducted regarding a polyethylene pellet having an average particle size of 4 - 6 µm, from which a transmittance characteristic is obtained which shows substantially the same waveform as the transmittance characteristic A, with the transmittance being slightly higher over the entire range.

As seen from Fig. 3, the polyethylene pellet having an average particle size of 53 - 75 µm shows a low-transmittance characteristic, in which transmittance sharply drops to about 30% at around wave number of 100 cm⁻¹, and then down to not more than 20% in the range of wave numbers not smaller than 140 cm⁻¹. It has been conventionally known that, with a polyethylene pellet having an average particle size of 53 - 75 µm, the detector 5 is not able to detect infrared light in the range of wave number 140 - 630 cm⁻¹, whereby spectrometry cannot be properly performed which is supported by the transmittance characteristic D.

If the transmittance is not larger than 30%, since the S/N ratio deteriorates even if the sensitivity of the detector 5 is enhanced about several times higher, it is difficult to obtain an appropriate spectrum waveform of an analysis target. With a polyethylene pellet having an average particle size of 53 - 75 µm, it was substantially impossible to perform spectrometry in the range of wave number 140 - 630 cm⁻¹. As understood from Fig. 3, the wave number at which transmittance sharply drops down to around 30% shifts to the high wave number side (short wavelength side) as the average particle size of the diluent decreases. Further, the gradient of the transmittance curve at the drops of transmittance becomes less steep as in the average particle size decreases.

In Fig. 3, since the average particle sizes are sampled is discretely, it is impossible to determine transmittance characteristics for the case in which the average particle size is smaller than 50µm and greater than 35µm and for the case in which the average particle size is smaller than 35 µm and greater than 9 µm. However, from the relationship of the average particle size and the transmittance characteristics A - D, it is extrapolated that the transmittance characteristic for the average particle size of 50 - 35 µm must be between the transmittance characteristics C and B, and the transmittance characteristic for the average particle size of 35 - 9 µm must be between the transmittance characteristics B and A.

The transmittance characteristic B offers a transmittance above 30% in the range of wave number 10 - 340 cm⁻¹. Therefore, on the assumption that the transmittance above 30% ensures the S/N ratio which allows the detector 5, the A/D converter 6 and the computer 7 to perform an appropriate signal processing, if a tablet type pellet made from the diluent of polyethylene powder having an average particle size not greater than 35µm is used, it is considered that a measurement in the range of wave number 140 - 250 cm⁻¹, at which conventional spectrometry is impossible, becomes possible.

Even if it is not possible to obtain a spectrum waveform over the entire terahertz range of a wave number not smaller than 140 cm⁻¹, spectrometry is possible at least in the high wave number range not smaller than 140 cm⁻¹ by selecting an appropriate average particle size below 35 µm. For example, if it is supposed that a polyethylene pellet having an average particle size of 30 µm shows a transmittance characteristic E as illustrated in a broken-line waveform E in Fig. 3, that is, a transmittance characteristic between the transmittance characteristics A and B, it is estimated that spectrometry is possible in the range of wave number 140 - 400 cm⁻¹ by using a tablet type pellet utilizing diluent of polyethylene powder having an average particle size of 30 µm.

On the other hand, the polyethylene pellet having an average particle size of 7 - 9 µm shows a transmittance above 75% in the range of wave number 3 - 630 cm⁻¹. Therefore, reliable and accurate spectrometry is possible over a wide wave number range by preparing a pellet using diluent of polyethylene powder having an average particle size of 7 - 9 µm.

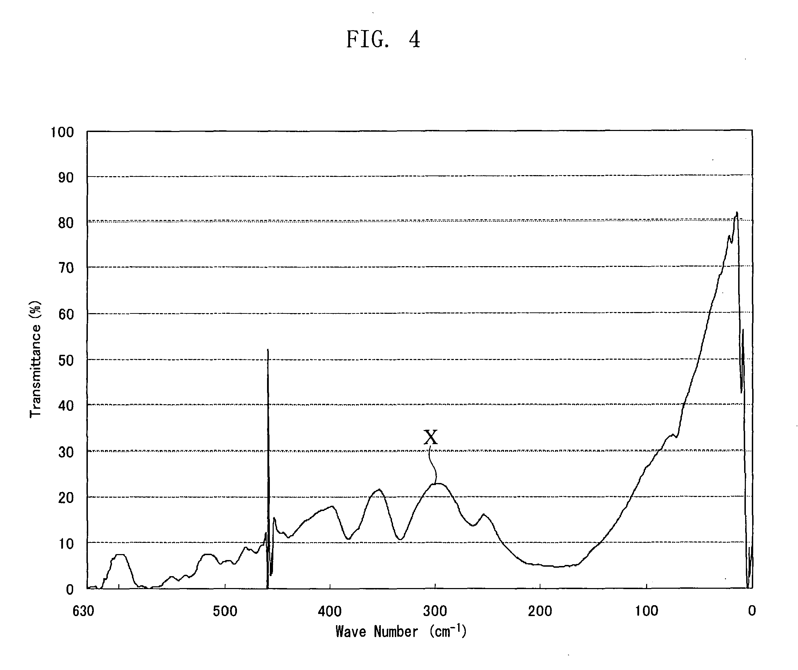

Fig. 4 shows an example of a result of spectrometry performed in the terahertz range using a polyethylene pellet employing diluent of polyethylene powder having an average particle size of 7 - 9 µm.

In the figure, the horizontal axis represents wave number (unit: cm⁻¹) whereas the vertical axis represents transmittance (unit: percentage) with the transmittance of air being 100%. X is the result of measurement using a tablet type pellet made by mixing polyethylene powder having an average particle size of 7 - 9 µm and an analysis target of methyl orange (sodium 4'-dimethylaminoazobenzene-4-sulfonate) at a ratio of 100:3 and pressing the mixture. It should be noted here that a noise appears near the wave number of 460 cm⁻¹, which is due to absorption by an optical device incorporated in the FT-IR 1, similar to the case shown in in Fig. 3.

As understood from the figure, a good spectrum waveform is obtained regarding the pellet used for X, even in the range of wave number 140 - 630 cm⁻¹, at which conventional spectrometry is impossible.

In this way, by using a tablet type pellet employing diluent of polyethylene powder having average particle size of 9 µm or smaller, it is possible to perform reliable and accurate spectrometry in a terahertz range covering wave number of 3 - 630 cm⁻¹ at one time with the single pellet.

In spectrometry, it is thought that characteristics mainly caused by intermolecular interaction appear in the range of wave number not greater than 200 cm⁻¹, whereas characteristics mainly caused by internal state of molecules appear in the range of wave number not smaller than 200 cm⁻¹. Therefore, in the spectrometry capable of performing measurements in the range of 3 - 630 cm⁻¹ at one time with a single pellet, it is possible to measure the intermolecular interaction while also identifying the sort of the molecular.

Fig. 3 illustrates an experiment example with polyethylene used as diluent. As other examples, polypropylene and PTFE (polytetrafluoroethylene), which have similar molecular structure to that of polyethylene, may exhibit similar characteristics.

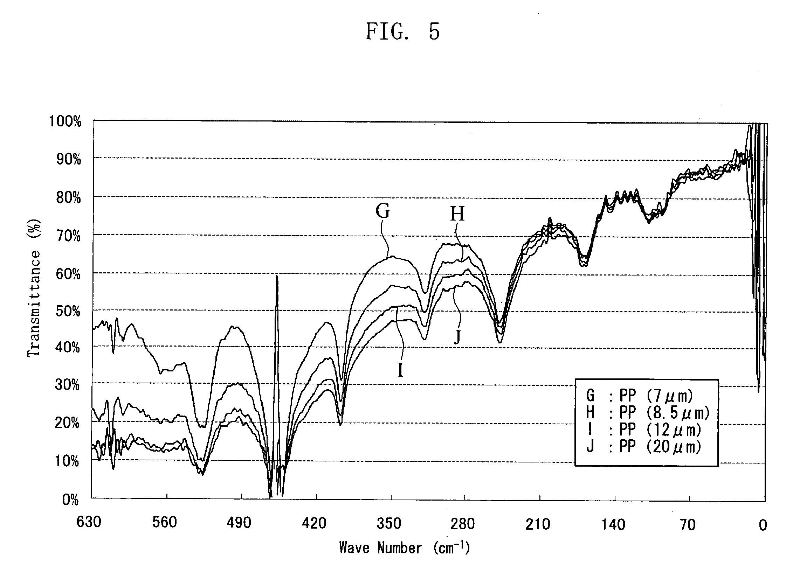

Fig. 5 shows transmittance characteristics in the terahertz range, of pellets each of which is made of polypropylene powder having a different average particle size.

In this figure, like in Fig. 3, the horizontal axis represents wave number (unit: cm⁻¹) whereas the vertical axis represents transmittance (unit: %). Waveforms G, H, I and J show transmittance characteristics of pellets made of polypropylene powder having an average particle size of 7 µm, 8.5 µm, 12 µm, and 20 µm, respectively. Similarly to Fig. 3, noise appears near the wave number 460 cm⁻¹ due to absorption by an optical device incorporated in the FT-IR 1.

As understood from the figure, transmittance above 30% is ensured in the range of wave number 10 - 400 cm⁻¹ regarding each of the pellets. Thus, by using these pellets, measurements in the range of wave number 140 - 250 cm⁻¹, in which conventional spectrometry is impossible, can be performed. Further, as shown in the figure, G shows the highest transmittance, and is followed by H, I and J in descending order. This indicates the similar relationship to that between the average particle size and the transmittance of polyethylene, that is, transmittance increases as the average particle size decreases.

As described above, the characteristics shown in Fig. 3 are not specific to polyethylene only, and polypropylene and PTFE exhibit similar characteristics. Thus, these materials are also usable if their average particle sizes are small enough. While the applicable range of particle size depends upon the chemical composition of the diluent, an average particle size below 35 µm, in particular below 10 µm, is desirable for use as diluent for the pellet according to the present invention. According to the present invention, the material usable as diluent for the pellet is not limited to these substances.

## Claims

1. A tablet type pellet used for spectrometry, comprising:
powder of a prescribed material having an average particle size not greater than 35 µm; and powder of an analysis target, wherein a mixture of the powder of the prescribed material and the powder of the analysis target is compacted into the pellet.

2. The pellet for spectrometry according to claim 1, wherein the prescribed material is a polymer compound.

3. The pellet for spectrometry according to claim 2, wherein the prescribed material is polyethylene.

4. A method for spectrometry comprising the steps of:
irradiating the pellet of claim 1 with light to obtain first spectrum data covering at least a range of wave number from 3 to 630 cm⁻¹ of light transmitted through the pellet;
irradiating another pellet prepared by compacting only the powder of the prescribed material with light to obtain second spectrum data covering at least a range of wave number from 3 to 630 cm⁻¹ of light transmitted through said another pellet; and
obtaining a transmittance spectrum waveform of the analysis target covering at least a range of wave number from 3 to 630 cm⁻¹ from the first spectrum data and the second spectrum data.

5. A method of manufacturing a pellet used for spectrometry, the method comprising the steps of:
mixing powder of a prescribed material having an average particle size not greater than 35µm and powder of an analysis target; and
compressing the mixed powders at a predetermined high pressure to form a tablet type pellet.
